# EUROPÄISCHE PATENTSCHRIFT

(11) **EP 2 761 727 B1**
(45) Veröffentlichungstag und Bekanntmachung des Hinweises auf die Patenterteilung: **16.10.2019**
(21) Anmeldenummer: 12745676.2
(22) Anmeldetag: 02.08.2012
(51) Int. Cl.: H02K 3/487, H02K 15/02, H02K 15/03, H02K 1/02

(54) **VERFAHREN ZUM HERSTELLEN EINER MASCHINENKOMPONENTE FÜR EINE ELEKTRISCHE MASCHINE, MASCHINENKOMPONENTE UND ELEKTRISCHE MASCHINE**
METHOD FOR PRODUCING A MACHINE COMPONENT FOR AN ELECTRICAL MACHINE, MACHINE COMPONENT AND ELECTRICAL MACHINE
PROCÉDÉ DE FABRICATION D'UN ÉLÉMENT DE MACHINE POUR MACHINE ÉLECTRIQUE, ÉLÉMENT DE MACHINE ET MACHINE ÉLECTRIQUE

(30) Priorität: 30.09.2011 DE 102011083917
(43) Veröffentlichungstag der Anmeldung: 06.08.2014
(73) Patentinhaber: Robert Bosch GmbH, 70442 Stuttgart (DE)
(72) Erfinder: SEITTER, Max, 75417 Muehlacker (DE); EWERT, Andreas, 77839 Lichtenau (DE); SCHLEGEL, Jan, 70372 Stuttgart (Bad Cannstatt) (DE); EVANS, Steven Andrew, 77815 Buehl (DE)
(86) Internationale Anmeldenummer: PCT/EP2012/065149
(87) Internationale Veröffentlichungsnummer: WO 2013/045142

(56) Entgegenhaltungen:
- DE-A1- 10 203 272
- JP-A- 10 212 588
- US-A1- 2004 212 256

## Beschreibung

### Technisches Gebiet

Die Erfindung betrifft elektrische Maschinen, insbesondere den Aufbau von Maschinenkomponenten mit ferromagnetischen Materialien und insbesondere Maßnahmen zur Führung des magnetischen Flusses.

### Stand der Technik

Elektrische Maschinen weisen in der Regel Statoren mit Statorzähnen auf. Die Statorzähne sind üblicherweise mit Statorspulen umwickelt, die abhängig von ihrer Bestromung ein Magnetfeld generieren. Zur Führung des Magnetfelds ist der Stator in der Regel magnetisch leitend ausgebildet, so dass das Magnetfeld in Richtung eines Läufers der elektrischen Maschine gerichtet wird.

Um den Stator magnetisch leitend auszubilden, wird dieser häufig aus gestapeltem Elektroblech ausgebildet. Alternativ können Segmente des Stators sowie vollständige Statoren auch mithilfe von Pulverwerkstoffen hergestellt werden. Pulverwerkstoffe werden dann durch ein Veredelungsverfahren, wie beispielsweise Warmpressen, Sintern, MIM und dergleichen, verarbeitet.

Bei der Herstellung der mit Statorspulen versehenen Statoren muss ein Kompromiss zwischen einer einfachen Herstellbarkeit und einer guten magnetischen Leitfähigkeit gefunden werden. Die Herstellbarkeit wird insbesondere durch die Nutzugänglichkeit, d. h. die Bewickelbarkeit der einzelnen Statorzähne bzw. das Einbringen von Wicklungsseiten zwischen zwei benachbarte Statorzähne, und einen geringen Montageaufwand definiert.

Beispielsweise können eine gegenüber einem Vollschnitt gute Nutzugänglichkeit und gute magnetische Leitfähigkeit erreicht werden, indem der Stator mithilfe von Teilsegmenten oder Einzelsegmenten aufgebaut wird, die nach dem Bewickeln der Statorzähne zu dem Stator zusammengefügt werden müssen. Ein Beispiel für ein derartiges Herstellungsverfahren sind T-Segment-Statoren. Hierbei ist jedoch das Zusammenfügen mit einem erheblichen Mehraufwand gegenüber einem nicht segmentierten Statorkörper verbunden.

Andererseits, wie aus der Druckschrift DE 198 42 948 bekannt, gibt es Designlösungen, die den Montageaufwand gegenüber dem Vollschnitt nur unwesentlich erhöhen, aber aufgrund ihrer Aufbauform nur mit einem systembedingten magnetischen Kurzschluss aufgebaut werden können. Diese Lösungen haben dadurch einen Nachteil bezüglich des Wirkungsgrads gegenüber Vollschnitt- oder T-Segment-Statoren. Insbesondere ist vorgesehen, den Stator mit miteinander verbundenen Zahnköpfen von Statorzähnen aufzubauen, wobei die Zahnköpfe über Stege mit reduziertem Querschnitt miteinander verbunden sind.

Aus der Druckschrift DE 10 2005 004 565 ist ein Verfahren zum Aufbau eines Stators mit einem Zwei-Zustands-Stahl mit einer hohen relativen Permeabilität bekannt. Um eine niedrige magnetische Leitfähigkeit (niedrige relative Permeabilität) zwischen den Zahnköpfen von benachbarten Statorzähnen zu erreichen, ist vorgesehen, Stege, durch die die Zahnköpfe miteinander verbunden sind, einer Wärmebehandlung zu unterziehen, so dass dort Abschnitte mit einer niedrigen relativen Permeabilität entstehen. Dadurch wird die magnetische Leitfähigkeit in diesen Abschnitten erheblich reduziert.

Aus der Druckschrift US 5,684 352 sind Rotorausführungen bekannt, die ferromagnetische Zonen des Stators zur Flussführung und magnetisch nicht leitende Zonen des Stators zur Flusstrennung aufweisen, so dass ein magnetischer Streufluss reduziert wird. Die magnetisch nicht leitenden Zonen im Stator werden beispielsweise durch Aufschmelzen des Statormaterials und durch Zugeben von Austenit bildenden Elementen in die Schmelze gebildet.

Aus der JP 10 212588 A und der DE 102 03 272 A1 sind Merkmale gemäß der Gattung der unabhängigen Ansprüche bekannt.

Das Dokument US2004/0212256 beschreibt ein Verfahren zum Herstellen einer Maschinenkomponente für eine elektrische Maschine, wobei die Maschinenkomponente mit einem magnetisch leitenden Material ausgebildet ist, in dem ein oder mehrere magnetisch nicht leitende Trennbereiche vorgesehen sind. Bei diesem Verfahren wird im magnetisch leitenden Material der Maschinenkomponente ein austenitisches

Gefüge in bestimmten Bereichen durch ein Aufschmelzvorgang gebildet.

Es ist Aufgabe der vorliegenden Erfindung, ein Verfahren zum Herstellen einer Maschinenkomponente für eine elektrische Maschine zur Verfügung zu stellen, die einfach hergestellt werden kann und gute Eigenschaften hinsichtlich der magnetischen Flussführung aufweist.

### Offenbarung der Erfindung

Diese Aufgabe wird durch das Verfahren zum Herstellen einer Maschinenkomponente für eine elektrische Maschine gemäß Anspruch 1 sowie durch die Maschinenkomponente und die elektrische Maschine gemäß den nebengeordneten Ansprüchen gelöst.

Weitere vorteilhafte Ausgestaltungen der vorliegenden Erfindung sind in den abhängigen Ansprüchen angegeben.

Gemäß einem ersten Aspekt ist ein Verfahren zum Herstellen einer Maschinenkomponente für eine elektrische Maschine vorgesehen, wobei die Maschinenkomponente mit einem magnetisch leitenden Material ausgebildet ist, in dem ein oder mehrere magnetisch nicht leitende Trennbereiche vorgesehen sind, wobei der Trennbereich durch Einbringen von Austenit bildendem Material bei einem Aufschmelzvorgang des magnetisch leitenden Materials der Maschinenkomponente gebildet wird, so dass ein austenitisches Gefüge im magnetisch leitenden Material der Maschinenkomponente gebildet wird.

Eine Idee des obigen Verfahrens besteht darin, ein magnetisch leitendes Material einer Maschinenkomponente durch Aufschmelzen und Einbringen eines Austenit bildenden Materials mit magnetisch nicht leitenden Trennbereichen zu versehen, die zur Vermeidung von magentischen Kurzschlüssen in der Maschinenkomponente vorgesehen werden.

Weiterhin kann vorgesehen sein, dass das Einbringen des Austenit bildenden Materials durch Aufbringen eines Dotierelements an oder in dem Trennbereich während oder vor dem Aufschmelzvorgang des magnetisch leitenden Materials der Maschinenkomponente durchgeführt wird, wobei das Dotierelement einen oder mehreren Stoffe enthält, die beim Aufschmelzvorgang des magnetisch leitenden Materials der Maschinenkomponente ein austenitisches Gefüge im Trennbereich bilden.

Gemäß einer weiteren Ausführungsform kann das an dem Trennbereich aufgebrachte Dotierelement streifenförmig, bandförmig, drahtförmig oder pulverförmig sein.

Eine Idee des obigen Verfahrens besteht darin, ein zuverlässiges Verbinden von Rändern einer Maschinenkomponente zur Verfügung zu stellen, bei dem die Verbindung eine geringe oder keine magnetische Leitfähigkeit aufweist. Durch Aufschmelzen des Materials der Maschinenkomponente und Zugabe von Austenit bildendem Material kann einerseits eine metallisch-robuste Verbindung zwischen den Rändern erreicht und andererseits sichergestellt werden, dass die Verbindung magnetisch nicht leitend ist.

Gemäß einer weiteren Ausführungsform kann die Maschinenkomponente einem Stator mit Statorzähnen oder einem Läufer mit Läuferpolen für eine rotatorische elektrische Maschine entsprechen, wobei die Trennbereiche jeweils zwischen zwei Statorzähnen bzw. zwischen zwei Rotorpolen vorgesehen werden.

Es kann weiterhin vorgesehen sein, dass sich der Trennbereich schräg zu einer axialen Richtung der elektrischen Maschine erstreckt. Dadurch können insbesondere durch Aufschmelzen der Maschinenkomponente in Trennbereichen, die magnetisch nicht leitend sein sollen, Verbindungen zwischen den Komponentenzähnen bzw. -polen geschrägt werden, wobei die Schrägung der magnetischen Trennung ohne Schrägung der einzelnen Komponentenzähne bzw. -pole auskommt. Dadurch kann die Geräuschentwicklung der elektrischen Maschine verbessert werden, ohne dass eine aufwändige Schrägwicklung notwendig ist. Insbesondere kann sich die Schrägung des Verlaufs des Trennbereichs zur axialen Richtung ein- oder mehrfach ändern, wobei bei einer mehrfachen Änderung der Schrägung auch Abschnitte des Trennbereichs parallel zur axialen Richtung verlaufen können.

Gemäß einem weiteren Aspekt ist eine Maschinenkomponente für eine elektrische Maschine, insbesondere ein Stator oder ein Läufer, vorgesehen, die nach dem obigen Verfahren hergestellt wird.

### Kurzbeschreibung der Zeichnungen

Bevorzugte Ausführungsformen der vorliegenden Erfindung werden nachfolgend anhand der beigefügten Zeichnungen näher erläutert. Es zeigen:
- Figur 1: ein Verfahren zum Herstellen eines Stators für eine elektrische Maschine durch Fügen von Statorzähnen in einen Ringkörper;
- Figur 2: eine veranschaulichende Darstellung des Aufbringens eines Bandes aus Austenit bildendem Material auf eine Grenzstelle zwischen zwei Statorsegmenten;
- Figuren 3a und 3b: Varianten zum Aufbringen des Austenit bildenden Materials in axialer Richtung durch Einlegen von Draht oder Auflegen eines Bandes vor dem Aufschmelzen; und
- Figuren 4a bis 4c: Möglichkeiten zum Vorsehen von magnetisch nicht leitenden Bereichen in einem Rotorkörper durch Aufbringen von Austenit bildendem Material in axialer Richtung vor dem Umschmelzen.

### Beschreibung von Ausführungsformen

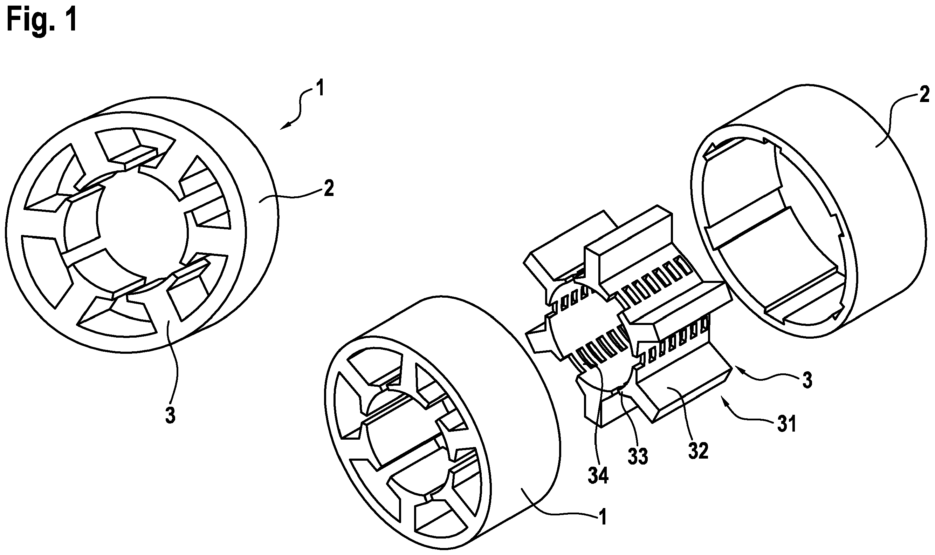

Figur 1 zeigt schematisch eine Explosionsdarstellung eines Stators 1 für eine elektrische Maschine sowie eine perspektivische Darstellung des Stators 1. Der Stator 1 wird durch Fügen eines Statorrings 2 und einer Zahnanordnung 3 montiert.

Die Zahnanordnung 3 weist einzelne in einer Umfangsrichtung zueinander benachbarte Statorzähne 31 mit jeweils einem Zahnkörper 32 und einem Zahnkopf 33 auf. Die Zahnköpfe 33 definieren eine Innenausnehmung, in der ein Läufer (nicht gezeigt) der elektrischen Maschine aufgenommen werden kann. Die benachbarten Zahnköpfe 33 können über die gesamte axiale Länge oder nur über einzelne Stege 34 mit entsprechenden dazwischen liegenden Ausnehmungen miteinander verbunden sein, so dass die Zahnanordnung 3 im Wesentlichen als ein einziges Bauelement gehandhabt werden kann. In alternativen Ausführungsformen kann auch vorgesehen sein, dass die einzelnen Statorzähne 31 separat voneinander hergestellt werden und in der Zahnanordnung 3 nicht miteinander verbunden sind.

Durch Fügen der Zahnanordnung 3 in den Statorring 2 kann der Stator 1 gebildet werden. Üblicherweise werden die Statorzähne 31 vor dem Einschieben der Zahnanordnung 3 in den Statorring 2 bewickelt. Die Statorwicklung kann in diesem Fall von außen auf den jeweiligen Statorkörper 32 aufgebracht werden.

Zur Stabilisierung des Stators 1 gegen mechanische Beanspruchungen, insbesondere auch aufgrund von Wärmeausdehnungen, ist es zweckmäßig, dass die Statorzähne 31 an ihrem vom Statorring 2 abstehenden Ende, d. h. an deren Zahnköpfen 33, miteinander verbunden sind, so dass eine relative Bewegung der Zahnköpfe 33 in Umfangsrichtung, d. h. in Richtung zu einem benachbarten Zahnkopf 33, weitestgehend unterbunden werden kann. Es wird daher vorgeschlagen, die zueinander gerichteten Zahnränder 36 der Zahnköpfe 33 durch Verschweißen bzw. Aufschmelzen entlang einer axialen Richtung des Stators 1 miteinander zu verbinden.

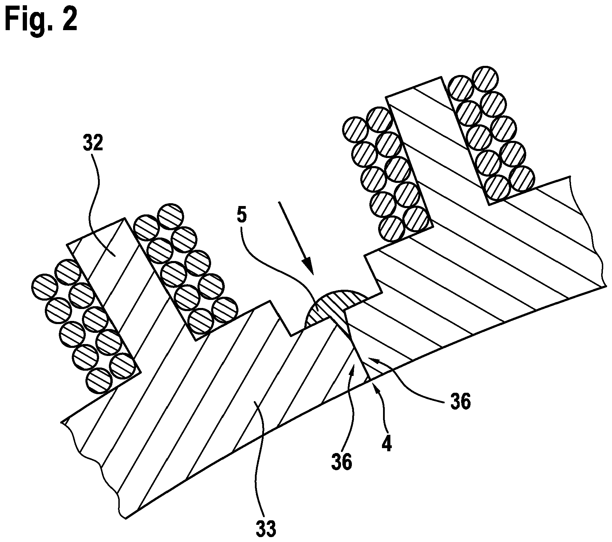

Dazu wird, wie in Figur 2 dargestellt, an einem Trennbereich 4 zwischen oder an die Zahnränder 36 zweier benachbarter Zahnsegmente der Zahnanordnung 3, d. h. an der Grenzstelle zwischen den benachbarten Zahnköpfen 33 bzw. in dem Bereich, in dem die Zahnränder 36 aufeinandertreffen, ein Dotierelement 5 aus Austenit bildendem Material aufgebracht und in einem Schweißvorgang bzw. Aufschmelzvorgang, aufgeschmolzen.

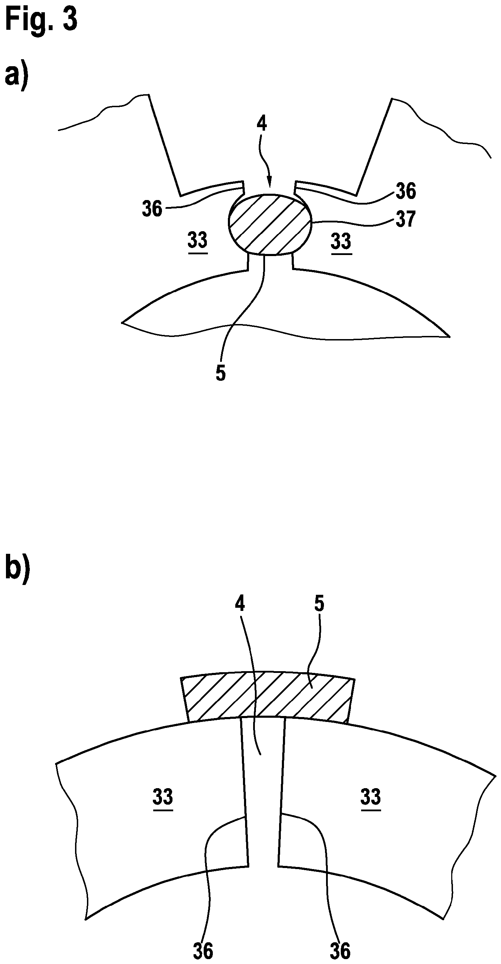

Das Aufbringen des Austenit bildenden Materials erfolgt über die gesamte axiale Länge des Stators 1 oder in mehreren aufeinanderfolgenden Abschnitten. Das Austenit bildende Material kann daher als ein Dotierelement 5 und beispielsweise bandförmig, streifenförmig, drahtförmig oder stabförmig ausgebildet sein. Alternativ kann das Austenit bildende Material auch als Pulver vor oder während des Aufschmelzens aufgebracht werden. In Figur 3b ist als Beispiel das Aufbringen eines bandförmigen Dotierelements 5 auf eine Grenzstelle im Querschnitt dargestellt.

Das Aufschmelzen kann mithilfe eines aus der Schweißtechnik bekannten Verfahrens durchgeführt werden, wie beispielsweise mithilfe eines Laserstrahls, Plasma- oder Lichtbogens.

Das Dotierelement 5 aus dem Austenit bildenden Material weist eine Zusammensetzung auf, die in Form und Menge so beschaffen ist, dass sich beim Aufbringen auf den Bereich, der aufgeschmolzen werden soll, der Trennbereich 4 mit einer Legierung aus dem Material des Stators 1 und dem Material des Elements bildet, so dass sich für alle bei Fertigung, Stillstand oder Betrieb der elektrischen Maschine auftretenden Temperaturen ein austenitisches Gefüge ergibt.

Ein austenitisches Gefüge ist bevorzugt, da es nicht ferromagnetisch ist und daher keine bzw. im Wesentlichen keine magnetische Leitfähigkeit aufweist. Materialien für das einzuschmelzende Element können beispielsweise Nickel, Mangan und/oder Kupfer zu einem hohen Gehalt von mehr als 80% aufweisen. Die Wirkung zur Bildung des austenitischen Gefüges kann durch einen zusätzlichen Gehalt an Kohlenstoff und/oder Chrom erhöht werden. Vorzugsweise weist der umgeschmolzene Trennbereich im Stator 1 folgende Anteile auf: 0 bis 25% Nickel, 0 bis 25% Mangan, 0 bis 10% Kupfer, 0 bis 1% Kohlenstoff und 0 bis 25% Chrom.

Das Aufschmelzen erfolgt üblicherweise durch Führen einer entsprechenden Schweißvorrichtung entlang der axialen Richtung über das aufzuschmelzende Dotierelement 5 bzw. entlang des Grenzbereichs zwischen den benachbarten Zahnrändern 36, so dass ein Bereich zwischen den Zahnköpfen 33 des Stators 1 vollständig aufgeschmolzen und eine Legierung mit dem Material des aufzuschmelzenden Dotierelements 5 gebildet wird.

Während in der dargestellten Ausführungsform der Figur 1 die Zahnköpfe 33 bereits durch Stege 34 miteinander verbunden sind, wenn das Aufschmelzen erfolgt, kann in einer weiteren Ausführungsform die Zahnanordnung 3 aus Einzelsegmenten aufgebaut sein und die Zahnköpfe 33 können jeweils eine Breite in Umfangsrichtung aufweisen, so dass die Zahnränder 36 zueinander benachbarter Zahnköpfe 33 aneinander anliegen oder einen nur geringen Abstand zueinander aufweisen. Somit kann durch den nachfolgenden Aufschmelzprozess der Zahnränder 36 zum Einbringen des Austenit bildenden Materials gleichzeitig eine stoffliche Verbindung zwischen benachbarten Zahnköpfen 33 sowie ein Trennbereich geschaffen werden, der magnetisch nicht leitend ist, so dass dort kein magnetischer Kurzschluss entstehen kann. Die Verbindung zwischen den Zahnköpfen 33 ermöglicht eine verbesserte mechanische Stabilität des Stators 1.

Beim Fügen einzelner zunächst nicht miteinander verbundener Zahnsegmente zu der Zahnanordnung 3 kann zwischen die Zahnköpfe 33 ein aufzuschmelzendes Dotierelement 5 eingelegt werden, wie es beispielsweise in der Abbildung der Figur 3a dargestellt ist. Dazu weisen die Zahnränder 36 der Zahnköpfe 33 Ausnehmungen 37 auf, so dass eine Aufnahme für ein drahtförmiges Dotierelement 5 ausgebildet wird. Dadurch ist es möglich, nach dem Fügen der Zahnsegmente zu der Zahnanordnung 3 das Aufschmelzen ohne vorheriges Aufbringen des Dotierelements 5 durchzuführen, und insbesondere gewährleistet diese Ausführungsform die zuverlässige Positionierung des aufzuschmelzenden Dotierelements 5 in dem Grenzbereich zwischen den Zahnrändern 36.

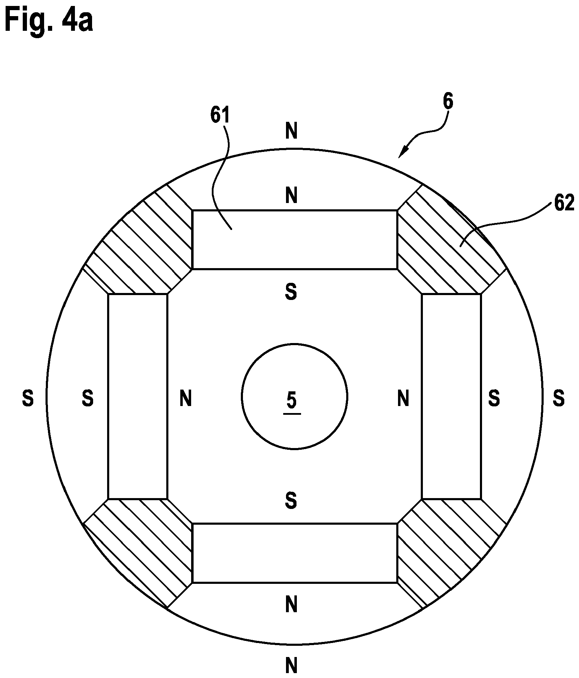

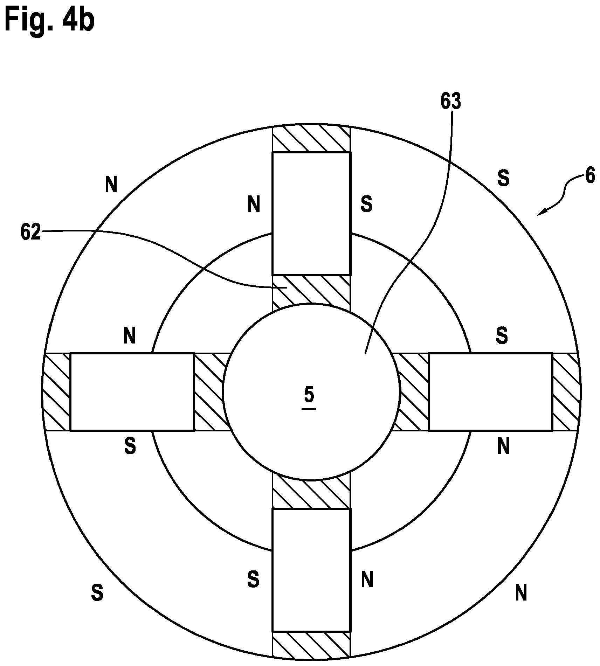

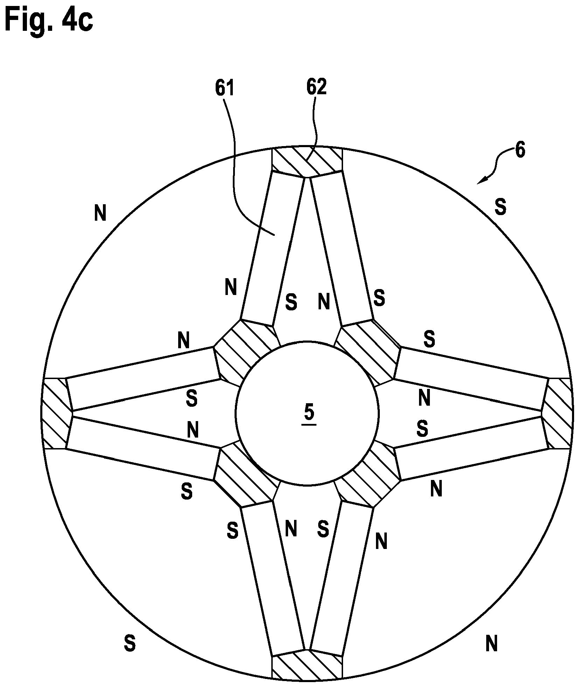

In den Abbildungen der Figuren 4a bis 4c sind Rotoranordnungen 6 als Maschinenkomponenten dargestellt. Die Rotoranordnungen weisen jeweils Taschen 61 zur Aufnahme von Permanentmagneten auf, um Rotorpole auszubilden. Zwischen den Taschen 61 sind zur Vermeidung von magnetischen Kurzschlüssen Trennbereiche 62 vorgesehen, die in ähnlicher Weise durch Aufbringen eines aufzuschmelzenden Dotierelements 5 entlang eines Bereichs in axialer Richtung und durch anschließendes Aufschmelzen bzw. Umschmelzen des Trennbereichs 62 hergestellt werden. Für den Rotor 6 kann dies ausgehend von einer Außenfläche des Rotors 6 oder von einer Innenfläche in einer Wellenausnehmung 63 durchgeführt werden.

Bei den oben beschriebenen Maschinenkomponenten können die Trennbereiche 62 auch schräg zur axialen Richtung zwischen den Zahnköpfen 33 vorgesehen werden, um im Falle des Stators 1 eine Pseudoschrägung der Statorzähne 31 bzw. bei der Rotoranordnung 6 eine Pseudoschrägung der Rotorpole vorzusehen. Dies ist vorteilhaft, da keine Verformung der Zahngeometrie notwendig ist, sondern lediglich der Überstand der Zahnköpfe 33 durch das schräge Vorsehen des Trennbereichs 62 vorgesehen werden kann.

## Patentansprüche

1. Verfahren zum Herstellen einer Maschinenkomponente (1) für eine elektrische Maschine, wobei die Maschinenkomponente (1) mit einem magnetisch leitenden Material ausgebildet ist, in dem ein oder mehrere magnetisch nicht leitende Trennbereiche (4) vorgesehen sind,
wobei der Trennbereich (4) durch Einbringen von Austenit bildendem Material bei einem Aufschmelzvorgang des magnetisch leitenden Materials der Maschinenkomponente (1) gebildet wird, so dass im magnetisch leitenden Material der Maschinenkomponente (1) ein austenitisches Gefüge gebildet wird, wobei ein Dotierelement (5) in oder an einem Grenzbereich zwischen gegenüberliegenden Rändern (36) der Maschinenkomponente (1) aufgebracht wird, wobei die Ränder (36) durch den Aufschmelzvorgang miteinander verbunden werden und das Austenit bildende Material des Dotierelements (5) mit dem magnetisch leitenden Material der Maschinenkomponente (1) das austenitische Gefüge bildet.

2. Verfahren nach Anspruch 1, wobei das Einbringen des Austenit bildenden Materials durch Aufbringen eines Dotierelements (5) an oder in dem Trennbereich während oder vor dem Aufschmelzvorgang des magnetisch leitenden Materials der Maschinenkomponente (1) durchgeführt wird, wobei das Dotierelement (5) einen oder mehreren Stoffe enthält, die beim Aufschmelzvorgang des magnetisch leitenden Materials der Maschinenkomponente (1) ein austenitisches Gefüge im Trennbereich (4) bilden.

3. Verfahren nach Anspruch 2, wobei das an dem Trennbereich (4) aufgebrachte Dotierelement (5) streifenförmig, bandförmig, drahtförmig oder pulverförmig ist.

4. Verfahren nach einem der Ansprüche 1 bis 3, wobei die Maschinenkomponente (1) einem Stator mit Statorzähnen (31) oder einem Läufer mit Läuferpolen für eine rotatorische elektrische Maschine entspricht, wobei die Trennbereiche (4) jeweils zwischen zwei Statorzähnen (31) bzw. zwischen zwei Rotorpolen vorgesehen werden.

5. Verfahren nach Anspruch 4, wobei sich der Trennbereich (4) schräg zu einer axialen Richtung der elektrischen Maschine erstreckt.

6. Verfahren nach Anspruch 5, wobei der Trennbereich (4) mehrere Abschnitte mit zu der axialen Richtung der elektrischen Maschine verschiedenen Schrägungen aufweist.

7. Maschinenkomponente für eine elektrische Maschine, insbesondere ein Stator oder ein Läufer, hergestellt nach einem Verfahren gemäß einem der Ansprüche 1 bis 6.

8. Elektrische Maschine mit einer Maschinenkomponente nach Anspruch 7.

## Claims

1. Method for producing a machine component (1) for an electrical machine, wherein the machine component (1) is configured having a magnetically conducting material in which one or a plurality of magnetically non-conducting separation regions (4) are provided, wherein the separation region (4) by incorporating austenite-forming material in a fusing procedure of the magnetically conducting material of the machine component (1) is formed such that an austenitic microstructure is formed in the magnetically conducting material of the machine component (1), wherein a doping element (5) is applied in or to a barrier region between two opposite peripheries (36) of the machine component (1), wherein the peripheries (36) are mutually connected by the fusing procedure and the austenite-forming material of the doping element (5) conjointly with the magnetically conducting material of the machine component (1) forms the austenitic microstructure.

2. Method according to Claim 1, wherein the incorporating of the austenite-forming material is carried out by applying a doping element (5) to or in the separation region during or prior to the fusing procedure of the magnetically conducting material of the machine component (1), wherein the doping element (5) contains one or a plurality of substances which when fusing the magnetically conducting material of the machine component (1) form an austenitic microstructure in the separation region (4).

3. Method according to Claim 2, wherein the doping element (5) that is applied to the separation region (4) is strip-shaped, tape-shaped, wire-shaped, or pulverulent.

4. Method according to one of Claims 1 to 3, wherein the machine component (1) corresponds to a stator having stator teeth (31) or to a rotor having rotor poles for a rotary electrical machine, wherein the separation regions (4) are in each case provided between two stator teeth (31), or between two rotor poles, respectively.

5. Method according to Claim 4, wherein the separation region (4) extends obliquely in relation to an axial direction of the electrical machine.

6. Method according to Claim 5, wherein the separation region (4) has a plurality of portions having dissimilar skews in relation to the axial direction of the electrical machine.

7. Machine component for an electrical machine, in particular a stator or a rotor, produced by a method according to one of Claims 1 to 6.

8. Electrical machine having a machine component according to Claim 7.

## Revendications

1. Procédé de fabrication d'un composant de machine (1) pour une machine électrique, le composant de machine (1) étant réalisé avec un matériau magnétiquement conducteur dans lequel se trouvent une ou plusieurs zones de séparation (4) non conductrices magnétiquement,
la zone de séparation (4) étant formée en incorporant un matériau formant de l'austénite lors d'une opération de fusion du matériau magnétiquement conducteur du composant de machine (1), de sorte qu'une structure austénitique soit formée dans le matériau magnétiquement conducteur du composant de machine (1),
un élément de dopage (5) étant appliqué dans ou au niveau d'une zone d'interface entre des bords (36) opposés du composant de machine (1), les bords (36) étant reliés l'un à l'autre par l'opération de fusion et le matériau formant l'austénite de l'élément de dopage (5) formant, avec le matériau magnétiquement conducteur du composant de machine (1), la structure austénitique.

2. Procédé selon la revendication 1, l'incorporation du matériau formant de l'austénite par application d'un élément de dopage (5) dans ou au niveau de la zone de séparation étant effectuée pendant ou avant l'opération de fusion du matériau magnétiquement conducteur du composant de machine (1), l'élément de dopage (5) contenant une ou plusieurs substances qui forment une structure austénitique dans la zone de séparation (4) lors de l'opération de fusion du matériau magnétiquement conducteur du composant de machine (1).

3. Procédé selon la revendication 2, l'élément de dopage (5) appliqué au niveau de la zone de séparation (4) étant sous forme de stries, sous forme de bandes, sous forme de fils métalliques ou sous forme de poudre.

4. Procédé selon l'une des revendications 1 à 3, le composant de machine (1) correspondant à un stator muni de dents de stator (31) ou à un rotor muni de pôles de rotor pour une machine électrique rotative, les zones de séparation (4) se trouvant respectivement entre deux dents de stator (31) ou entre deux pôles de rotor.

5. Procédé selon la revendication 4, la zone de séparation (4) s'étendant en biais par rapport à une direction axiale de la machine électrique.

6. Procédé selon la revendication 5, la zone de séparation (4) possédant plusieurs portions ayant des inclinaisons différentes par rapport à la direction axiale de la machine électrique.

7. Composant de machine pour une machine électrique, notamment un stator ou un rotor, fabriqué conformément à un procédé selon l'une des revendications 1 à 6.

8. Machine électrique équipée d'un composant de machine selon la revendication 7.
